# EUROPEAN PATENT APPLICATION

(11) **EP 4 596 956 A1**
(43) Date of publication of application: **06.08.2025**
(21) Application number: 25151845.2
(22) Date of filing: 14.01.2025
(51) Int. Cl.: F21S 2/00, F21S 4/28, F21V 5/00, F21V 29/67, F21V 29/71, F21V 29/76, F21W 131/406, F21Y 105/16, F21Y 107/60, F21Y 115/10

(54) **LIGHT BEAM PROJECTION DEVICE**

(30) Priority: 29.01.2024 IT 202400001611
(71) Applicant: Music & Lights S.r.l., 04026 Minturno Latina (IT)
(72) Inventor: Sorabella, Fabio, 04023 FORMIA (LATINA) (IT); Di Fusco, Matteo Luciano, 04022 FONDI (LATINA) (IT)
(74) Representative: Milli, Simone

(57) **Abstract**

Described is a device for projecting light beams comprising, on a single supporting frame (1), first panel (2) having a first plurality of LED sources (3) uniformly positioned on the first panel (2); each LED source (3) has a collimator device (4) configured to obtain a respective beam of parallel light rays along a direction of emission (D) and a second panel (5) having a second plurality of LED sources (6) positioned uniformly on the second panel (5); the second panel (5) is positioned in front of the first panel (2), relative to the direction of emission(D), in such a way as to have at least a part of its LED sources (6) positioned with a centre of emission of the light beam coinciding with the centre of emission of the light beam of a corresponding number of LED sources (3) of the first panel (2) positioned behind the second panel (5); the second panel (5) has, for each of its LED sources (6) positioned coinciding with the centre of emission of the respective LED source (3) of the first panel (2), a relative open section (7), surrounding its LED source (6), configured as an opening for the free passage of the light beam generated by the respective LED source (3) of the first panel (2).

## Description

This invention relates to a device for projecting light beams.

In the cinematographic sector there are various types of lighting devices for different applications on the production set: the so-called "soft light" devices and the so-called "hard light or long throw" devices.

The soft light projection devices are designed to diffuse a homogeneous and soft light over a large area.

These devices are often used to reduce hard shadows and create more even lighting on the scene.

This type of projection device comprises a matrix or panel on which are positioned and uniformly distributed (in length and width) a plurality of LED sources (without collimating devices for controlling the light beam) connected to at least one power supply source and a control unit.

The device is usually provided with a front sheet defining a filter for the LED sources configured for homogenizing and softening the beam of light at the outlet.

Hard light projection devices are designed to project a concentrated and directional beam of light over a significant distance.

These devices generate well defined shadows and a more intense and focused luminous effect.

Such devices are often used to simulate natural light sources such as the sun, or to highlight specific elements or characters inside a scene.

These projection devices comprise a matrix or panel on which are positioned and uniformly distributed (in length and width) a plurality of LED sources, provided equipped with a collimating device for controlling the beam of light in parallel ray directions, connected to at least one power supply source and a control unit.

Usually, the LED sources of this type of device have a power greater than the power of the LED sources of the projection devices of the soft light type.

The two types of devices described below are known from patent documents US2009/046459 and EP 1 118 813.

Currently, therefore, in order to have different projection solutions in the cinematographic context it is necessary to provide different projection devices according to the production requirements.

This type of requirement therefore increases the costs for production and transport of the devices for projecting light beams which must often be distributed in various locations.

Moreover, both the devices described below are not designed and configured with a frame which is able to adapt to modular mounting in order to increase the operating capacity of the projections.

The aim of this invention is to provide a device for projecting light beams which overcomes the drawbacks of the prior art described above.

In particular, the aim of this invention is to provide a device for projecting light beams which is able to provide different or combined types of projections of light beams in a single component.

A further aim of this invention is to provide a device for projecting light beams which is able to obtain modular units of devices with a multiple use as a function of the production requirements.

Said aims are fully achieved by a device for projecting light beams according to the invention as characterised in the appended claims.

The main features of the invention will become more apparent from the following detailed description of a preferred, non-limiting embodiment, illustrated purely by way of example in the accompanying drawings, in which:
- Figure 1 is a perspective exploded rear view of a device for projecting light beams according to this invention;
- Figure 2 is a perspective exploded front view of the device for projecting light beams according to this invention;
- Figure 3 is a perspective view of an enlarged detail of the assembled device of Figures 1 and 2;
- Figures 4 and 5 show a projection unit equipped with six projection devices according to the preceding drawings, Figure 4 is a perspective view and Figure 5 is a front view;
- Figure 6 is an enlarged detail of the projection unit of Figure 5;
- Figure 7 is a side view of the device of Figures 1 and 2.

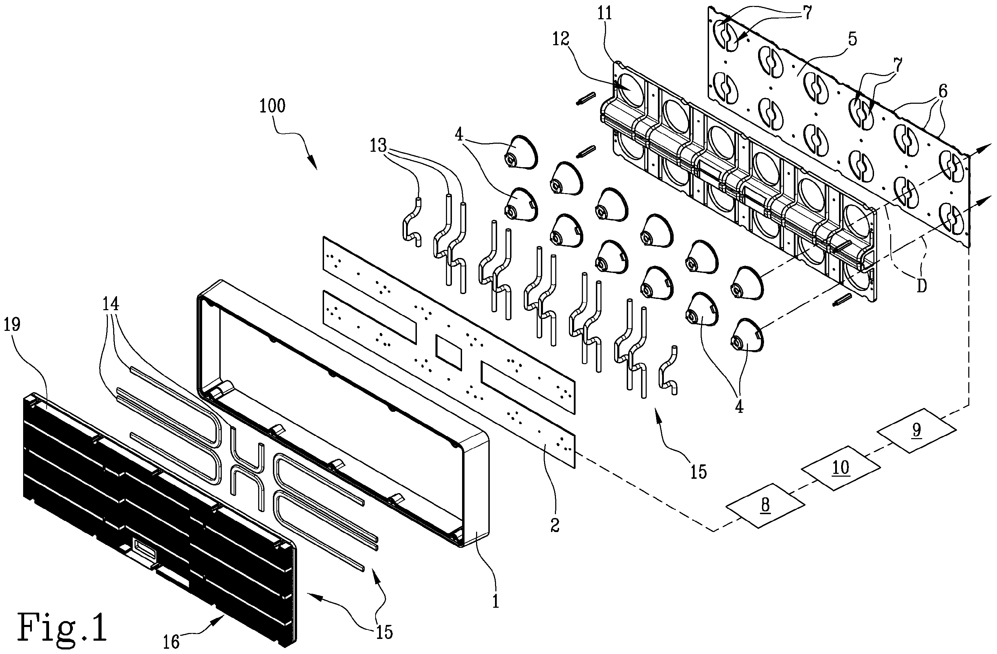

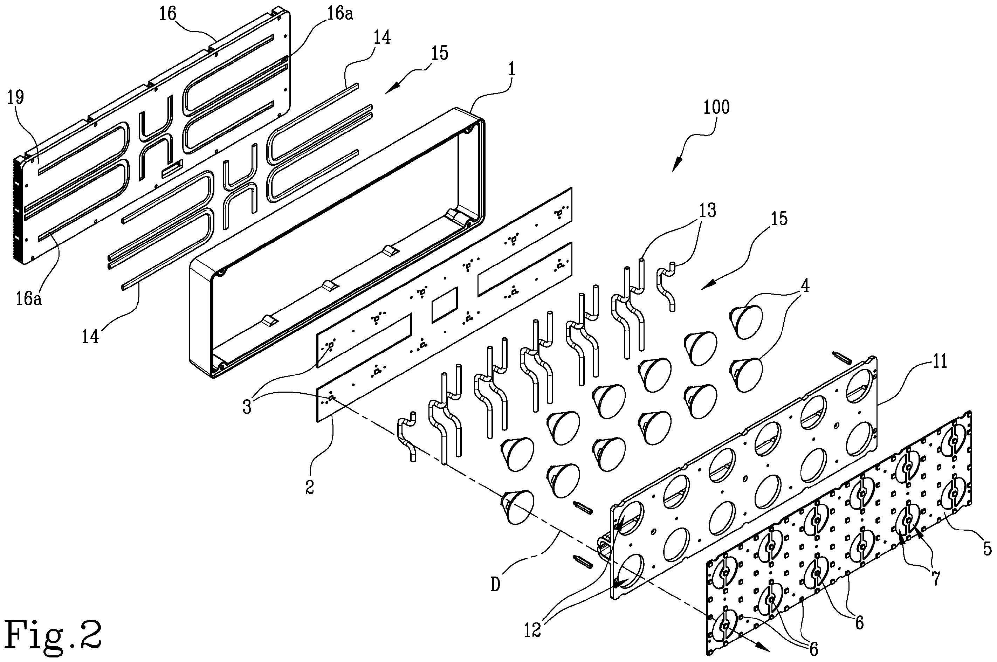

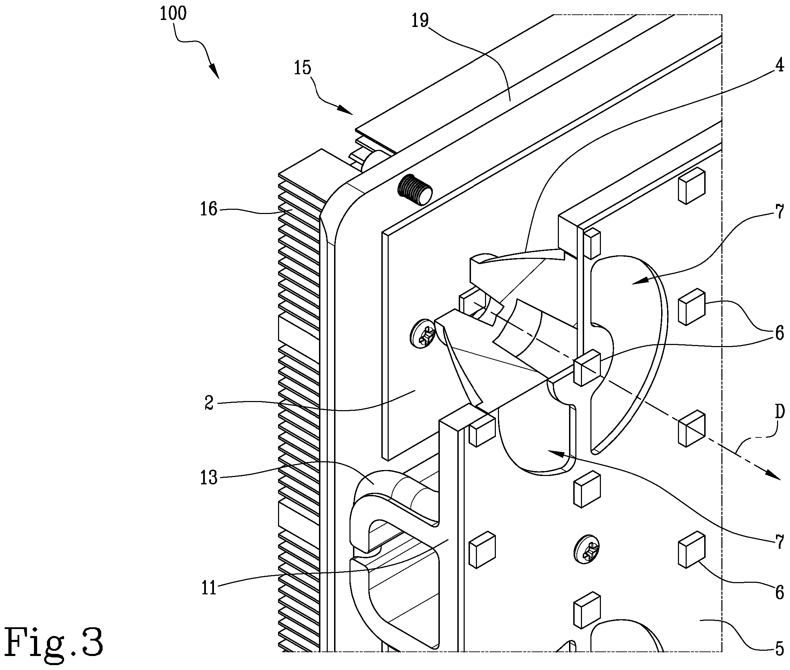

With reference to the accompanying drawings, and with particular reference to Figures 1 to 3, the device according to this invention, labelled 100 in its entirety, is used for projecting light beams.

In particular, this projection device is used in the cinematographic sector for different applications on sets or in outdoor contexts.

As illustrated, the device 100 for projecting light beams comprises a single mounting frame 1 (which, for example, has a quadrangular shape) containing two panels (or matrices) placed one ahead of the other and having different types of LEDs.

As illustrated, the device 100 for projecting the light beam has a first panel 2 having a first plurality of LED sources 3 uniformly positioned on the first panel 2.

Each LED source 3 of the first panel 2 has a collimator device 4 configured to obtain a respective beam of parallel light rays along a direction of emission D.

Again as illustrated, the device 100 for projecting light beams has a second panel 5 having a second plurality of LED sources 6 uniformly positioned on the second panel 5.

The second panel 5 is positioned in front of the first panel 2, relative to the direction of emission D, in such a way as to have at least a part of its LED sources 6 positioned with a centre of emission of the light beam coinciding with the centre of emission of the light beam of a corresponding number of LED sources 3 of the first panel 2 positioned behind the second panel 5. Moreover, the second panel 5 has, for each relative LED source 6 positioned coinciding with the centre of emission of the respective LED source 3 of the first panel 2, an open section 7, surrounding its LED source 6, configured as an opening for the free passage of the light beam generated by the respective LED source 3 of the first panel 2.

In other words, this device makes it possible to obtain, in a single assembly, a combination of projection elements with different operating features which can be used separately or together.

As described in more detail below, the first panel has features which are able to provide a projection of the "hard light or long throw" type which is able to project a concentrated and directional beam of light over a significant distance so as to provide well defined shadows and a more intense and focused luminous effect, whilst the second panel has features which are able to provide a projection of the "soft light" type for diffusing a homogeneous and soft light on a large area or to reduce hard shadows and create a more uniform illumination on the scene.

Again as illustrated, the second panel 5 has each open section 7 configured to match at least a part of the end section of the collimator 4 of the respective LED source 3 of the first panel 2 positioned coinciding with the respective LED source 6 of the second panel 5.

In light of this, the second panel 5 has each open cross section 7 formed through a partial window on the second panel 5 having a shape with two arcs opposite each other.

Each arc partly surrounds the respective LED source 6 of the second panel 5 and is interrupted along a central line passing through the LED source 6 of the second panel 5 in such a way that the LED source is at the centre of the open section 7 in its entirety.

In light of this, each collimator 4 has a circular-shaped end section positioned in contact with the two arc-shaped openings of the open section 7 and with the central break line.

It should be noted that each collimator 4, by way of non-limiting example, has a truncated cone shape and its larger base defines the end section in contact with the respective open section 7 of the second panel 5.

As illustrated, the first panel 2 has a number of LED sources 3 less than the number of LED sources 6 of the second panel 5.

The first plurality of LED sources 3 is uniformly distributed on the first panel 2 at regular distances or spacings relative to each other

Similarly, the second plurality of LED sources 6 is uniformly distributed on the second panel 5 at regular distances or spacings relative to each other. It should be noted that the first plurality of LED sources 3 has a distance or spacing greater than the distance or spacing of the second plurality of LED sources 6.

Again as illustrated, the LED sources 3 of the first panel 2 have a first power supply unit 8 having an operating power.

In light of this, the LED sources 6 of the second panel 5 have a second power supply unit 9, independent of the first power supply unit 8, with an operating power different from the operating power of the first power supply unit 8.

Preferably, the first power supply unit 8 has an operating power greater than the operating power of the second power supply unit 9.

Again as illustrated, the device 100 comprises an operating control unit 10 connected to the first and second plurality of LED sources 3 and 6. Preferably, the control unit 10 is also connected to the first and second power supply units 8 and 9.

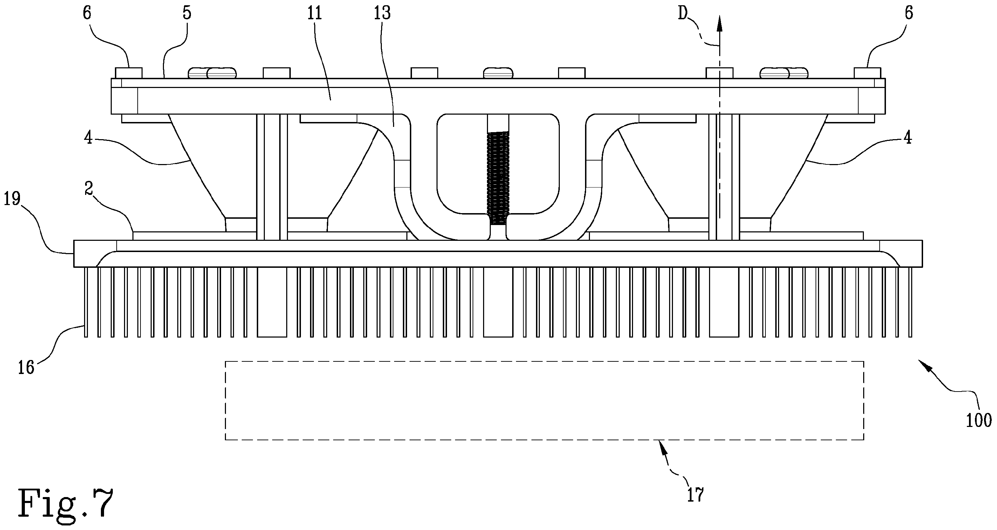

As illustrated (see also Figure 7), the device 100 comprises a cooling system 15 for the respective LED sources of the first panel 2 and the second panel 5.

In light of this, the cooling system 15 comprises a first 13 and a second 14 plurality of heat pipes or heat pipes associated, respectively, on the first panel 2 and second panel 5 and, in use, in mutual contact, in such a way as to transfer and dissipate the heat generated by the LED sources of the first panel 2 and second panel 5.

Each first 13 and second 14 plurality of heat pipes or heat pipes is configured and shaped to allow a fast and uniform dissipation of the heat on both the panels 2 and 5.

The device 100 also comprises a third panel or mask 11 interposed between the first panel 2 and the second panel 5.

The mask 11 has a series of stabilising seats 12 (circular) for the end of the respective collimators 4 of the LED sources 3 of the first panel 2 in contact with the open sections 7 of the second panel 5.

The mask 11 is associated with the second plurality 14 of heat pipes or heat pipes positioned along the mask 11 in such a way as not to interfere with the first 3 and the second 6 plurality of LED sources.

Each heat pipe forming part of the second plurality 14 is shaped to match the rear profile of the mask 11.

A stretch of each heat pipe of the second plurality 14 has at least one relative stretch (the central one) in contact with a stretch of a heat pipe of the first plurality 13 in such a way as to more quickly transfer the heat from the second panel 5.

More specifically, the first panel 2 is associated at the rear with a fourth panel 19.

On the fourth panel 19 there is the first plurality 13 of heat pipes embedded in respective seats 19a made on its surface facing the first panel 2.

The fourth panel 19 is provided with a plurality of fins 16 configured for dissipating heat and with a seat for an air flow generator 17 (for example a fan indicated with a dashed line in Figure 7).

The fins 16 and the seat for the generator are formed behind the surface provided with the seats 19a for housing the first plurality 13 of heat pipes.

In light of this, each heat pipe of the first plurality 13 is U-shaped to be able to have a contact with one or more heat pipes of the second plurality 14 so as to obtain a rapid exchange of heat along the entire the surfaces of the first 2 and second 5 panel.

The presence of the fins 16 and of the generator 17 allows the effectiveness of cooling the LED sources to be increased.

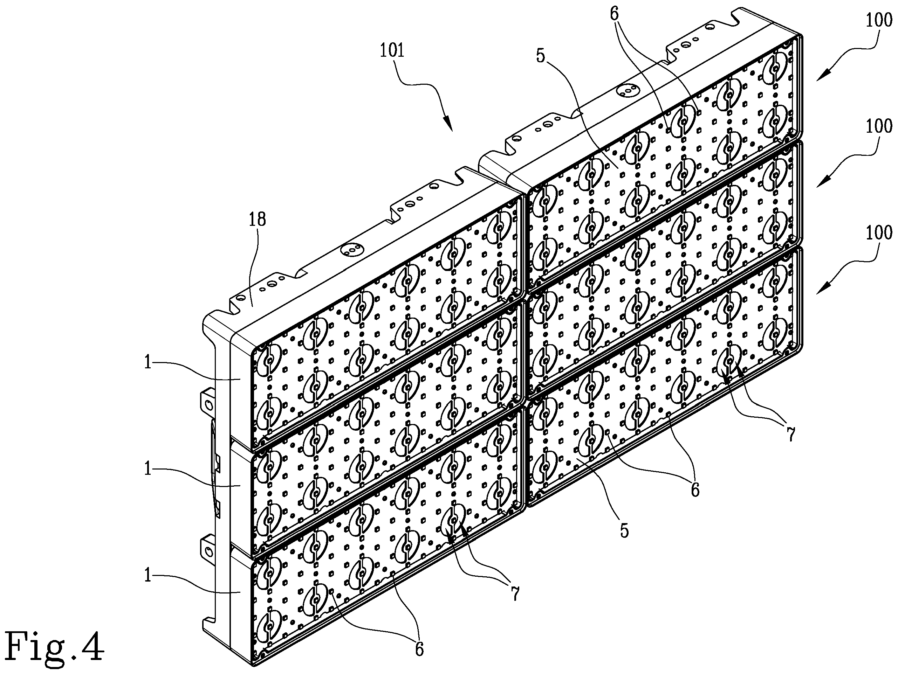

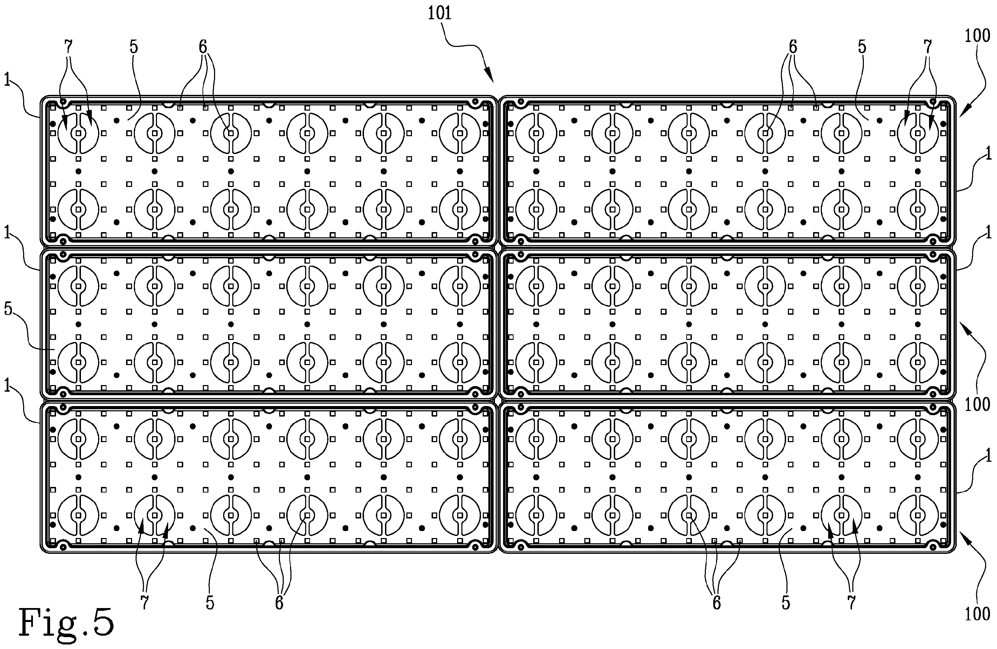

This invention also provides a unit 101 for projecting light beams of the modular type (see Figures 4 to 6).

This unit 101 comprises a load-bearing frame 18 configured for assembling a plurality of devices 100 for projecting light beams, as illustrated above, arranged side by side in such a way as to form a continuous projection surface.

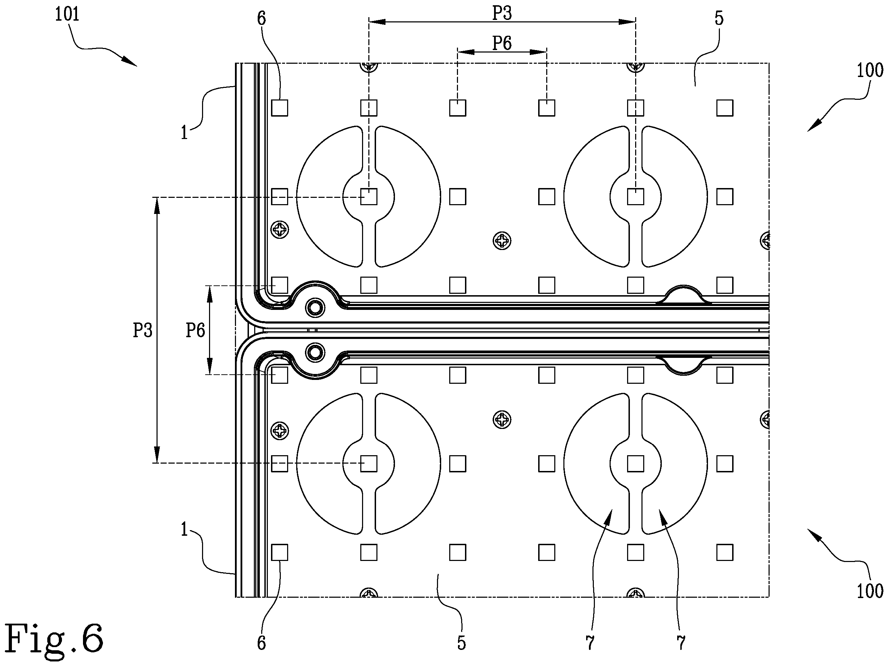

Thanks to the particular structure of the device 100 wherein both the LED sources 3 and 6 of the first and second panels 2 and 5 have a respective constant centre-to-centre distance inside the module formed by the device 100 it is possible to obtain a modular housing in the unit 101 wherein (see also Figure 6) in use and assembled the devices 100 positioned alongside or superposed on other devices 100 (in the case illustrated three devices side by side) have the distinctive feature of forming a single modular panel wherein the two LED sources present have the same distance or spacing (pixel pitch) P3 and P6 as both the sources on all the sides of the modular screen formed. In effect, the spacing P3 and P6 of the sources as well as being kept inside the same device is also maintained when this is interconnected to other panels thus having a continuous assembly on all sides of the unit 101 thus creating a continuous projection screen.

## Claims

1. A device for projecting light beams, **characterised in that** it comprises on a single supporting frame (1):
- a first panel (2) having a first plurality of LED sources (3) uniformly positioned on the first panel (2); each LED source (3) having a collimator device (4) configured to obtain a respective beam of parallel light rays along a direction of emission (D);
- a second panel (5) having a second plurality of LED sources (6) positioned uniformly on the second panel (5); the second panel (5) being positioned in front of the first panel (2), relative to the direction of emission(D), in such a way as to have at least a part of its LED sources (6) positioned with a centre of emission of the light beam coinciding with the centre of emission of the light beam of a corresponding number of LED sources (3) of the first panel (2) positioned behind the second panel (5); **characterised in that** the second panel (5) has, for each relative LED source (6) positioned coinciding with the centre of emission of the respective LED source (3) of the first panel (2), a relative open section (7), surrounding its LED source (6), configured as an opening for the free passage of the light beam generated by the respective LED source (3) of the first panel (2).

2. The device according to claim 1, wherein the second panel (5) has each open section (7) configured to match at least a part of the end section of the collimator (4) of the respective LED source (3) of the first panel (2) positioned coinciding with the respective LED source (6) of the second panel (5).

3. The device according to claim 2, wherein the second panel (5) has an open section (7) formed through a partial window on the second panel (5) having a shape with two arcs opposite each other, each arc partly surrounding the respective LED source (6) of the second panel (5) and being interrupted along a central line passing through the LED source (6) of the second panel (5) in such a way that the LED source is at the centre of the open section (7) in its entirety.

4. The device according to claim 3, wherein each collimator (4) has a circular-shaped end section positioned in contact with the two arc-shaped openings of the open section (7) and with the central break line.

5. The device according to any one of the preceding claims, wherein the first panel (2) has a number of LED sources (3) which is less than the number of LED sources (6) of the second panel (5); the first plurality of LED sources (3) being uniformly distributed on the first panel (2) at regular distances or steps relative to each other; the second plurality of LED sources (6) being uniformly distributed on the second panel (5) at regular distances or steps relative to each other; the first plurality of LED sources (3) having a distance or step greater than the distance or step of the second plurality of LED sources (6).

6. The device according to any one of the preceding claims, wherein the LED sources (3) of the first panel (2) have a first power supply unit (8) having an operating power, and the LED sources (6) of the second panel (5) having a second power supply unit (9), independent of the first power supply unit (8), with an operating power different from the operating power of the first power supply unit (8).

7. The device according to any one of the preceding claims, comprising an operational control unit (10) connected to the first and second plurality of LED sources (3, 6).

8. The device according to any one of the preceding claims, comprising a cooling system (15) for the respective LED sources of the first panel (2) and second panel (5); the cooling system (15) comprising a first (13) and a second (14) plurality of heat pipes or heat pipes associated, respectively, on the first panel (2) and second panel (5) and, in use, in mutual contact, in such a way as to transfer and dissipate the heat generated by the LED sources of the first panel (2) and second panel (5).

9. The device according to claim 8, comprising a third panel or mask (11) interposed between the first panel (2) and the second panel (5); the mask (11) having a series of stabilising seats (12) for the end of respective collimators (4) of the LED sources (3) of the first panel (2) in contact with the open sections (7) of the second panel (5), the mask (11) being associated with the second plurality (14) of heat pipes, positioned along the mask (11) in such a way as not to interfere with the first (3) and the second (6) plurality of LED sources.

10. The device according to claim 8, wherein the first panel (2) is associated at the rear with a fourth panel (19); on the fourth panel (19) being positioned the first plurality (13) of heat pipes positioned embedded in respective seats (19a) made on its surface facing the first panel (2); the fourth panel (19) being provided with a plurality of fins (16) configured for dissipating heat and a seat for a generator (17) for a flow of air made at the rear of its surface provided with the seats (19a) for housing the first plurality (13) of heat pipes.

11. A unit for projecting light beams, **characterised in that** it comprises a load-bearing frame (18) configured for assembling a plurality of devices (100) for projecting light beams according to any one of claims 1 to 10 positioned side by side in such a way as to form a continuous projection surface.
